# EUROPEAN PATENT APPLICATION

(11) **EP 4 311 852 A1**
(43) Date of publication of application: **31.01.2024**
(21) Application number: 22187488.6
(22) Date of filing: 28.07.2022
(51) Int. Cl.: C10L 3/08, C10L 3/10, B01D 53/22

(54) **PROCESS IMPROVEMENT UPGRADING IN POWER-TO-X (PTX) PROCESSES**

(71) Applicant: Paul Scherrer Institut, 5232 Villigen (CH)
(72) Inventor: Schildhauer, Tilman J., 5200 Brugg (CH)
(74) Representative: Fischer, Michael

(57) **Abstract**

Thus, the objective of the present invention is to provide a method and a system for the optimization of the part load capabilities of a biogas based PtX conversion that offer a better capability of using hydrogen that is generated or has not been used in the methanation process for further process steps, such as a recycling into the methanation process.

This objective according to the present invention by a method and a system (2) for the optimization of the part load capabilities of a biogas based PtX conversion, comprising:
a) a fluidized bed reactor (18) enabled to convert biogas into a CH4-enriched product gas stream (16);
a) a regular membrane upgrading unit (6) enabled to treat the CH4-enriched product gas stream (16) wherein the regular membrane upgrading unit (6) at least comprises a main membrane (8) being enabled to separate CO2 from methane to yield injectable CH4 enriched gas and a CO2 cleaning membrane (10) being enabled to recover permeated methane downstream of the main membrane (8) from CO2; and
c) a polymeric gas separation membrane (4) being enabled to treat the CH4-enriched product gas stream (16) wherein the polymeric gas separation membrane (4) is in addition to the regular membrane upgrading unit (6) and is positioned downstream of the fluidized bed reactor (18) and upstream of the regular membrane upgrading unit (6).

By the provision of the additional polymeric gas separation membrane, the method and the system allow to increase the recycle rate of hydrogen in the process and therefore reduce its loss through the off gas stream. At the same time, the present invention also allows to decrease the slip of CH4 through the same path and reduce the energy loss through the off gas stream.

## Description

The present invention is related to a method and a system for the optimization of the part load capabilities of a biogas based PtX conversion.

Biogas based PtX conversion processes are widely used. These processes will form part in the replacement of fossil fuel for the energy and/or heat generation. For the optimization of the operating conditions in methanation processes, an appropriate part load of the biogas with hydrogen is desired.

Thus, the objective of the present invention is to provide a method and a system for the optimization of the part load capabilities of a biogas based PtX conversion that offer a better capability of using hydrogen that is generated or has not been consumed in the methanation process for further process steps, such as a recycling into the methanation process.

This objective according to the present invention by a method according to claim 1 and a system according to claim 2. By the provision of the additional polymeric gas separation membrane, the method and the system allow to increase the recycle rate of hydrogen in the process and therefore reduce its loss through the off gas stream. At the same time, the present invention also allows to decrease the slip of CH4 through the same path and reduce the energy loss through the off gas stream.

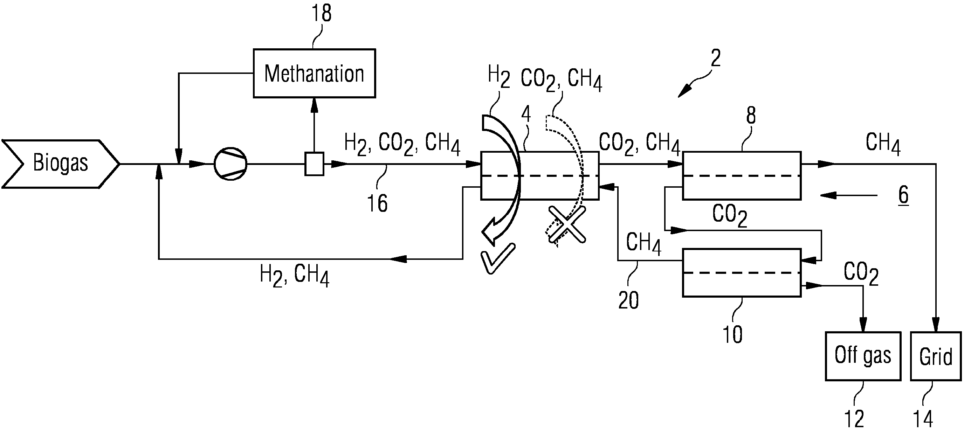

Preferred embodiments of the present invention are hereinafter described in more detail with reference to the drawing which depict in the figure a schematic view on a system 2 for biogas based PtX conversion. In order to further improve the part load capabilities of a biogas-based PtX process, the figure shows the introduce of a polymeric gas separation membrane 4 in addition to a regular membrane upgrading unit 6 that usually comprises a main membrane 8 (that separates CO2 from methane to yield injectable gas for a gas grid 14) and a CO2 cleaning membrane 10 (that recovers permeated methane from the CO2 before it is vented with the off gas stream 12). The present invention allows thus to increase the recycle rate of hydrogen in the process at an early stage and therefore reduce its loss through an off gas stream 12. At the same time, the present invention also allows to decrease the slip of CH4 through the same path and reduce the energy loss through the off gas stream 12.

The polymeric gas separation membrane 4 - also called hereinafter sweep membrane - can be applied in a raw product gas stream 16 coming from the methanation reactor 18 upstream of the regular membrane upgrading unit 6. Under favorable conditions, the polymeric gas separation membrane 4 separates at least a part of the hydrogen already before the raw product gas stream 16 enters the regular membrane upgrading system 6.

Furthermore, CO2 may be transferred from the recycle stream to the retentate side. This leads to an accumulation of CO2 and therefore a replacement of H2 with CO2 in the membrane upgrading unit 6.

A scheme for the sweep membrane process indication the desired and undesired permeating flow in the sweep membrane is illustrated in the figure. The left arrow over the sweep membrane 4 represents the desired H2 permeation (light-grey color) while the right arrow over the sweep membrane represents the blocking function of the sweep membrane 4 for the undesired permeation of CO2 and CH4 (dark-grey color).

This additional sweep membrane 4 is equipped with an inlet at the permeate side for a so-called sweep stream (see Figure). The recycle stream of the plant, corresponding to the retentate of the second upgrading stage in the membrane upgrading unit, directly forms the sweep-stream 20. The advantage of feeding the recycle stream as a sweep stream 20 to the permeate side is, that it lowers the partial pressure difference of CO2 and CH4. Therefore, the permeation of these components in the sweep membrane 4 can be inhibited. On the other hand, as the H2 content in the recycle stream is already decreased by the second membrane stage 10, the permeation of H2 is favored. Therefore, under favorable conditions, it is possible to increase the selective recycling of H2 without changing the membrane type.

In order to investigate the feasibility of this selective separation of H2 and the benefits of a sweep stream on the membrane's performance, simulations as well as field tests were performed on the commercial biogas upgrading membrane. Both delivered promising results in this regard.

The polymeric gas separation membrane 4 can be made from polymers, such as poly-imide, poly-propylene etc. Ceramic and metallic membranes are often a bit more selective than polymeric membranes but they require significantly higher temperatures (as compared to ambient temperatures or slightly elevated temperatures above ambient temperature) and often also higher pressure gradients over the membrane.

The polymeric membranes further enables the operator of the system 2 to support the adjustment of specific selectivity of the permeation conditions by an appropriate adjustment of the content in the sweep gas stream 20 without losing any permeability for the desired H2 permeation in the respective sweep membrane 4.

## Claims

1. A method for the optimization of the part load capabilities of a biogas based PtX conversion,
comprising the steps of:
a) converting biogas in a fluidized bed reactor (18) into a CH4-enriched product gas stream (16);
a) treating the CH4-enriched product gas stream (16) by using a regular membrane upgrading unit (6) that at least comprises a main membrane (8) separating CO2 from methane to yield injectable CH4 enriched gas and a CO2 cleaning membrane (10) recovering permeated methane downstream of the main membrane (8) from CO2; and
c) leading the CH4-enriched product gas stream (16) over a polymeric gas separation membrane (4) thereby positioning the polymeric gas separation membrane (4) in addition to the regular membrane upgrading unit (6) downstream of the fluidized bed reactor (18) and upstream of the regular membrane upgrading unit (6).

2. A system (2) for the optimization of the part load capabilities of a biogas based PtX conversion,
comprising:
a) a fluidized bed reactor (18) enabled to convert biogas into a CH4-enriched product gas stream (16);
a) a regular membrane upgrading unit (6) enabled to treat the CH4-enriched product gas stream (16) wherein the regular membrane upgrading unit (6) at least comprises a main membrane (8) being enabled to separate CO2 from methane to yield injectable CH4 enriched gas and a CO2 cleaning membrane (10) being enabled to recover permeated methane downstream of the main membrane (8) from CO2; and
c) a polymeric gas separation membrane (4) being enabled to treat the CH4-enriched product gas stream (16) wherein the polymeric gas separation membrane (4) is in addition to the regular membrane upgrading unit (6) and is positioned downstream of the fluidized bed reactor (18) and upstream of the regular membrane upgrading unit (6).
